# EUROPEAN PATENT SPECIFICATION

(11) **EP 3 133 518 B1**
(45) Date of publication and mention of the grant of the patent: **28.08.2019**
(21) Application number: 15858115.7
(22) Date of filing: 06.03.2015
(51) Int. Cl.: G06F 21/14, G06F 21/12

(54) **APPARATUS AND METHOD FOR CODE OBFUSCATION USING INDISTINGUISHABLE IDENTIFIER CONVERSION**
VORRICHTUNG UND VERFAHREN ZUR CODEVERSCHLEIERUNG MIT NICHT UNTERSCHEIDBARER IDENTIFIKATORUMWANDLUNG
APPAREIL ET PROCÉDÉ POUR UN OBSCURCISSEMENT DE CODE À L'AIDE D'UNE CONVERSION D'IDENTIFICATEUR NE POUVANT PAS ÊTRE DISTINGUÉ

(30) Priority: 08.01.2015 KR 20150002933
(43) Date of publication of application: 22.02.2017
(73) Proprietor: Soongsil University Research Consortium Techno-Park, Seoul 156-743 (KR)
(72) Inventor: YI, Jeong Hyun, Seongnam-si Gyeonggi-do 463-730 (KR); KIM, Sung Ryoung, Seoul 156-030 (KR); NA, Geon Bae, Seoul 156-881 (KR); PARK, Yong Jin, Seoul 143-827 (KR)
(74) Representative: Roos, Peter
(86) International application number: PCT/KR2015/002197
(87) International publication number: WO 2016/111413

(56) References cited:
- KR-A- 20120 006 288
- KR-A- 20140 114 769
- KR-B1- 101 350 390
- US-A1- 2007 256 061
- US-A1- 2007 256 061
- Patrick Schulz: "Code Protection in Android", , 7 June 2012 (2012-06-07), XP055429188, Retrieved from the Internet: URL:http://citeseerx.ist.psu.edu/viewdoc/d ownload?doi=10.1.1.469.6113&rep=rep1&type= pdf [retrieved on 2017-11-27]
- CIMATO S ET AL: "Overcoming the obfuscation of Java programs by identifier renaming", JOURNAL OF SYSTEMS & SOFTWARE, ELSEVIER NORTH HOLLAND, NEW YORK, NY, US, vol. 78, no. 1, 1 October 2005 (2005-10-01), pages 60-72, XP027636525, ISSN: 0164-1212 [retrieved on 2005-10-01]

## Description

### [Technical Field]

The present invention relates to an apparatus and a method for code obfuscation using identifier conversion. More particularly, the present invention relates to an apparatus according to the preamble of claim 1 and a method according to the preamble of claim 4 for code obfuscation using identifier conversion that may protect an application program from a reverse engineering attack.

### [Background Art]

The Java program is translated into a form of bytecodes, and since the bytecodes are codes using a Java virtual machine that is not dependent on a specific machine, they may be executed by any machine supporting a Java virtual machine. Information of Java source codes is included in the codes translated into the bytecodes as it was, thus it is easy to decompile them from the bytecodes to the Java source codes. In addition, when even the android application basically implemented in the Java language is decompiled, it can be easily restored to source codes similar to the original source codes.

Generally, when an android application package (APK) file is decompiled, source codes thereof may be grasped, and reverse engineering and cracking against it are possible. In order to solve the problems, an obfuscation scheme is applied to the source codes, and when the obfuscation scheme is applied, the source codes may not be grasped through decompiling. Further, the reverse engineering, the cracking, etc. may be prevented.

Here, the obfuscation means to convert program codes with a specific scheme so as to protect the program codes from malicious software reverse engineering, thus it may be difficult for binaries or source codes thereof to be analyzed by the reverse engineering.

The obfuscation is classified into source code obfuscation and binary obfuscation according to a compiled form of a target program. The source code obfuscation means to convert program source codes of C, C++, JAVA, etc. into barely understandable forms, and the binary obfuscation means to convert binaries generated after C, C++, JAVA, etc. are compiled into barely understandable forms through the reverse engineering. Particularly, since compiled codes of the JAVA called bytecodes include more information required for the reverse engineering than native codes, it is possible to easily perform the reverse engineering. Accordingly, the obfuscation scheme is widely applied to the bytecodes.

Identifier conversion, control flow, string encryption, API hiding, class encryption, etc. are mainly used in the obfuscation scheme. The identifier conversion is to allow analysis of decompiled source codes to be difficult by substituting meaningless names irrelevant to original names for names of classes, the fields, or methods. Particularly, identifiers may be converted by a command-shortening scheme.

When the identifier conversion is used, although the meaning information of the identifiers may be hidden, when the reverse engineering is performed, the identifiers may be identified as unique identifiers. Accordingly, since an attacker may easily recognize the unique identifiers, the identifier conversion scheme does not provide high resistance against the reverse engineering attack.

The background art of the present invention is disclosed in the Korean Patent No. 10-1328012 (published on November 13, 2013).

An apparatus for code obfuscation using identifier conversion according to the preamble of claim 1 and a method for code obfuscation using identifier conversion according to the preamble of claim 4 are known from the publication Patrick Schulz: "Code Protection in Android", Institute of Computer Science 4, Communication and Distributed Systems, Rheinische Friedrich-Wilhelms-Universität Bonn, Germany, Seminar: Communication and Communicating Devices, June 7, 2012.

Further, a similar obfusication technique is disclosed in S. Cimato et al: "Overcoming the obfusication of Java programs by identifier renaming", Journal of Systems and Software, Elsevier North Holland, New York, NY, USA, Vol. 78 (2005), No. 1, January 8, 2005, pages 60-72.

Further, a method and system for obfusicating pseudocode is disclosed in US 2007/0256061 A1, mentioning that a class name can be obfusicated further by using unprintable characters or characters from uncommon languages.

### [DISCLOSURE]

### [Technical Problem]

The present invention has been made in an effort to provide an apparatus and a method for code obfuscation using identifier conversion that may protect an application program from a reverse engineering attack with increased reverse engineering resistance.

### [Technical Solution]

The present invention provides an apparatus according to claim 1 and a method according to claim 4. Advantageously, the invention provides for code obfuscation using indistinguishable identifier conversion by inserting the selected obfuscation characters into the bytecodes, wherein the obfuscation characters express characters which are expressed by the same characters as other characters, and which have different unicodes.

The extractor may extract a bytecode of a DEX file by decompressing the compression of the application program file.

The identifier converter may insert the obfuscation character into at least one of a class name, a method name, and a field name of the bytecode.

### [Advantageous Effects]

According to the embodiment of the present invention, it is possible to increase the static analysis-based reverse engineering resistance by converting the identifier with the obfuscation characters which are expressed by the same characters as other characters.

Further, since it is possible to confuse the attacker by using the obfuscation characters that have different unicodes but are identically expressed, the reverse engineering analysis resistance may be strengthened, and since the binary file analysis ability is required during the reverse engineering attack, the reverse engineering analysis resistance may be improved.

Further, according to the exemplary embodiment of the present invention, by applying the obfuscation scheme to the application program, it is possible to prevent the technology from being leaked and the application program to be counterfeited and forged due to the analysis of the application program, and it is possible to protect the application program from various security attacks.

### [Description of the Drawings]

FIG. 1 illustrates a block diagram of an apparatus for code obfuscation using identifier conversion according to an exemplary embodiment of the present invention.
FIG. 2 illustrates a flowchart of a code obfuscation method using identifier conversion according to an exemplary embodiment of the present invention.
FIG. 3 illustrates a schematic diagram for explaining a code obfuscation method using identifier conversion according to an exemplary embodiment of the present invention.
FIG. 4 illustrates a schematic diagram for explaining resistance improvement against reverse engineering analysis by a code obfuscation method using identifier conversion according to an exemplary embodiment of the present invention.

### [Best Mode]

The present invention will be described more fully hereinafter with reference to the accompanying drawings, in which exemplary embodiments of the invention are shown. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

Hereinafter, exemplary embodiments of the present invention will be described in detail with reference to the accompanying drawings.

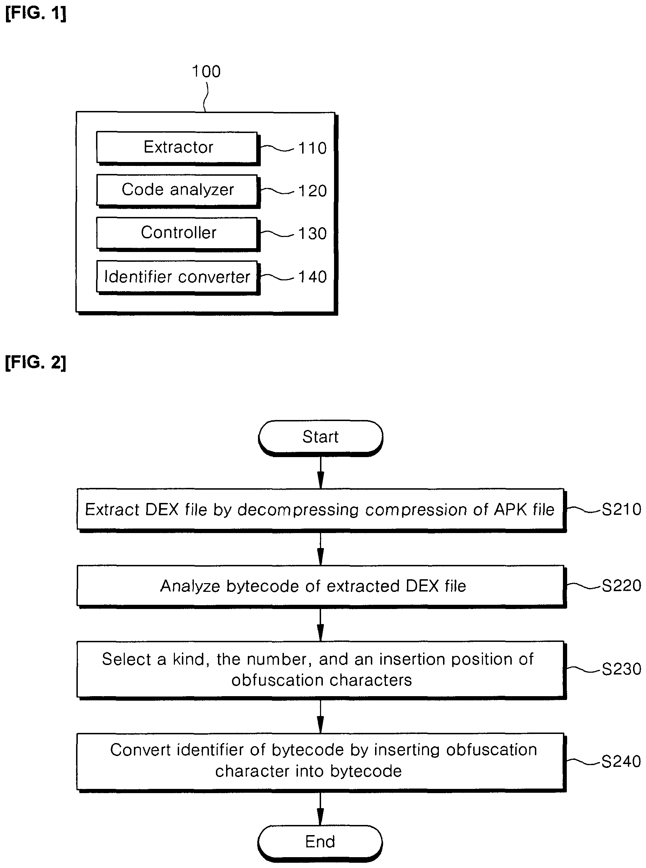

FIG. 1 illustrates a block diagram of an apparatus for code obfuscation using identifier conversion according to an exemplary embodiment of the present invention. As shown in FIG. 1, an apparatus 100 for code obfuscation using identifier conversion according to an exemplary embodiment of the present invention includes an extractor 110, a code analyzer 120, a controller 130, and an identifier converter 140.

First, the extractor 110 extracts a Dalvik executable (DEX) file by decompressing compression of an application program file. In this case, the application program file may be an android application package (APK) file, and the extractor 110 may decompress the compression of the APK file to extract bytecodess of the DEX file.

Next, the code analyzer 120 analyzes bytecodes of the extracted DEX file.

The controller 130 selects kinds, the number, and insertion positions of obfuscation characters. Here, the obfuscation characters means those that are not displayed on a screen or that are expressed as the same shaped characters as other characters on the screen, and they have different unicodes.

The identifier converter 140 converts the identifier of the bytecode inserting the selected obfuscation character into the bytecode. In this case, the identifier converter 140 may insert an obfuscation character into at least one of a class name, a method name, and a field name of the bytecode. The identifier converter 140 rebuilds the bytecode into which the obfuscation character is inserted.

Hereinafter, a method of protecting an application program according to an exemplary embodiment of the present invention will be described in detail with reference to FIG. 2 to FIG. 4.

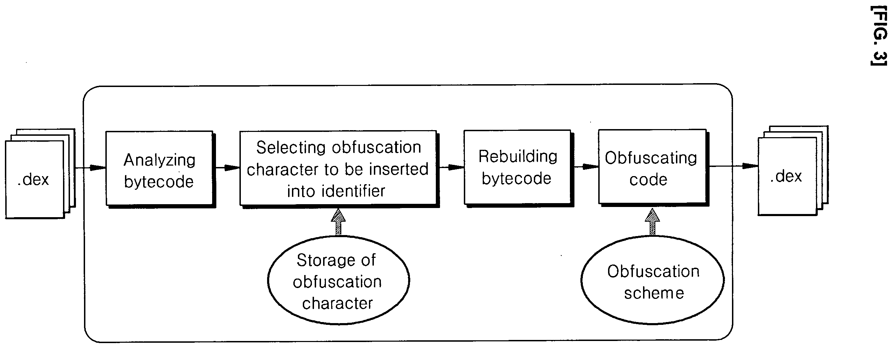

FIG. 2 illustrates a flowchart of a code obfuscation method using identifier conversion according to an exemplary embodiment of the present invention, and FIG. 3 illustrates a schematic diagram for explaining a code obfuscation method using identifier conversion according to an exemplary embodiment of the present invention.

First, the extractor 110 decompresses the compression of the APK file corresponding to an application program file to extract the DEX file (S210).

The APK file is a ZIP file type of compression package used for distribution and installation of applications in a google's android operating system. Users may obtain the APK file by using the android debug bridge (ADB) included in the android SDK or by using a file management application such as an ASTRO file manager, a file expert, an ES file searcher, etc.

The extractor 110 may decompress the compression of the APK file of the application program to extract the DEX file by using a file compression/decomposition utility such as 7-Zip, WinZip, etc. When the compression of the APK file is decompressed, files and directories such as classes.dex, AndroidManifest.xml, META-IMF/, res/, resources.arsc, assets/, lib, etc. may be obtained, wherein the classes.dex file among them is a DEX file which is a core file of constituent elements included in the APK file.

The Classes.dex file is generated by converting Java bytecodes into a dalvik executable file format (.dex) so that a Java bytecode (.class) generated by compiling a Java code (.java) may be recognized and executed by a dalvik virtual machine of the android.

The code analyzer 120 analyzes bytecodes of the extracted DEX file (S220). The code analyzer 120 may grasp pluralities of classes, methods, fields, etc. included in the DEX file, and may select the identifiers of the classes, the methods, the fields, etc. into which the obfuscation characters are inserted.

The controller 130 selects the kinds, the numbers, and the insertion positions of the obfuscation characters inserted into the bytecodes (S230).

In this case, although the obfuscation characters are recognized as individual characters having different unicodes in the obfuscation system, they are expressed as null values or are expressed as the same characters as characters having different unicodes in a typical text editor. Accordingly, the obfuscation characters may be identified by only editors targeting binaries such as a hexa-editor.

**(Table 1)**

| **UTF-8 value** | **Character expression** |
|---|---|
| 0xC2AD | (Invisible) |
| ... | ... |
| 0xD7BA | □ |
| 0xD7BB | □ |
| 0xD7BC | □ |
| 0xD7BD | □ |
| ... | ... |

As shown in Table 1, although being not expressed in the typical text editor such as 0xC2AD of Alt+0173 and UTF in Windows, when being outputted in a soft hyphen by the editors targeting binaries, a corresponding character is used as an obfuscation character.

In addition, as shown in Table 1, since all of characters corresponding to a plurality of codes are expressed in the symbol "□", when it is impossible to identify the codes of the corresponding characters by the expressed characters, the corresponding characters may be used as the obfuscation characters. That is, as the symbol "□" is used as the obfuscation character, the attacker is not capable of identifying the code of the corresponding obfuscation character to be any of 0xD7BA, 0xD7BB, 0xD7BC, and 0xD7BD in a smali code.

The controller 130 determines the kinds of the obfuscation characters and the numbers and the insertion positions of the obfuscation characters inserted into the identifiers of the bytecodes.

**(Table 2)**

| | | | | | | | | | | | |
|---|---|---|---|---|---|---|---|---|---|---|---|
| Before application | g | e | t | S | e | c | r | e | t | | |
| | 0x67 | 0x65 | 0x74 | 0x53 | 0x65 | 0x63 | 0x72 | 0x65 | 0x74 | | |
| Application 1 | g | e | t | S | | | e | c | r | e | t |
| | 0x67 | 0x65 | 0x74 | 0x53 | 0xC2 | 0xAD | 0x65 | 0x63 | 0x72 | 0x65 | 0x74 |
| Application 2 | g | e | t | S | e | c | r | e | t | | |
| | 0x67 | 0x65 | 0x74 | 0x53 | 0x65 | 0x63 | 0x72 | 0x65 | 0x74 | 0xC2 | 0xAD |

As shown in Table 2, when 0xC2AD corresponding to the obfuscation character represented by a null value is inserted into the method name called "getSecret", the controller 130 may determine its insertion position so that the obfuscation character is inserted into the middle of the method name as in application 1, or the obfuscation character is inserted into the end of the method name as in application 2.

The controller 130 determines the number of any obfuscation characters to be inserted into anywhere of the class name, the method name, and the field name selected by the code analyzer 120 as targets into which the obfuscation character are inserted.

**(Table 3)**

| | | | | | | | | | | | |
|---|---|---|---|---|---|---|---|---|---|---|---|
| Before application | g | e | t | S | e | c | r | e | t | | |
| | 0x67 | 0x65 | 0x74 | 0x53 | 0x65 | 0x63 | 0x72 | 0x65 | 0x74 | | |
| Application 3 | g | e | t | S | e | c | r | e | t | □ | |
| | 0x67 | 0x65 | 0x74 | 0x53 | 0x65 | 0x63 | 0x72 | 0x65 | 0x74 | 0xD7 | 0xBA |
| Application 4 | g | e | t | S | e | c | r | e | t | □ | |
| | 0x67 | 0x65 | 0x74 | 0x53 | 0x65 | 0x63 | 0x72 | 0x65 | 0x74 | 0xD7 | 0xBB |

The controller 130 may select an obfuscation character such as 0xD7BA and 0xD7BB that are the indistinguishable obfuscation character as the value of the code. As in applications 3 and 4, even though the same symbol "□" is used, the controller 130 selects codes of obfuscation characters to be inserted so that the codes of the actual obfuscation characters may be different from each other.

Next, the identifier converter 140 converts the identifier of the bytecode by inserting the selected obfuscation character into the bytecodes (S240). The identifier converter 140 converts the identifier of the bytecode by inserting the obfuscation character selected by the controller 130 at step S230 into the identifier of the bytecode selected by the code analyzer 120 at step S220.

As shown in FIG. 3, when the identifier conversion is completed, the identifier converter 140 generates the DEX file having the converted identifier by rebuilding a structure of the bytecode.

The apparatus 100 for the code obfuscation according to the exemplary embodiment of the present invention may further apply the obfuscation solutions of the Proguard, the Dexguard, the Allatori, the Stringer Java Obfuscator, etc. to the bytecodes having the identifier converted at step S240.

Moreover, the apparatus 100 for the code obfuscation may further apply the source code obfuscation or the binary obfuscation. Particularly, control flow, string encryption, API hiding, and class encryption may be applied.

The control flow means a scheme that inserts an indistinguishable opaque command or a garbage command so that an control flow analysis may be difficult or an incorrect result may occur during a reverse engineering, and the string encryption means a scheme that decrypts and uses a specific string through an encryption method when the specific string is encrypted and then executed. The API hiding means a scheme that hides a sensitive library and method call, and the class encryption means a scheme that decrypts a specific class file when the specific string itself is encrypted and then executed.

The apparatus 100 for the code obfuscation 100 may apply layout obfuscation, data obfuscation, aggregation obfuscation, and control obfuscation.

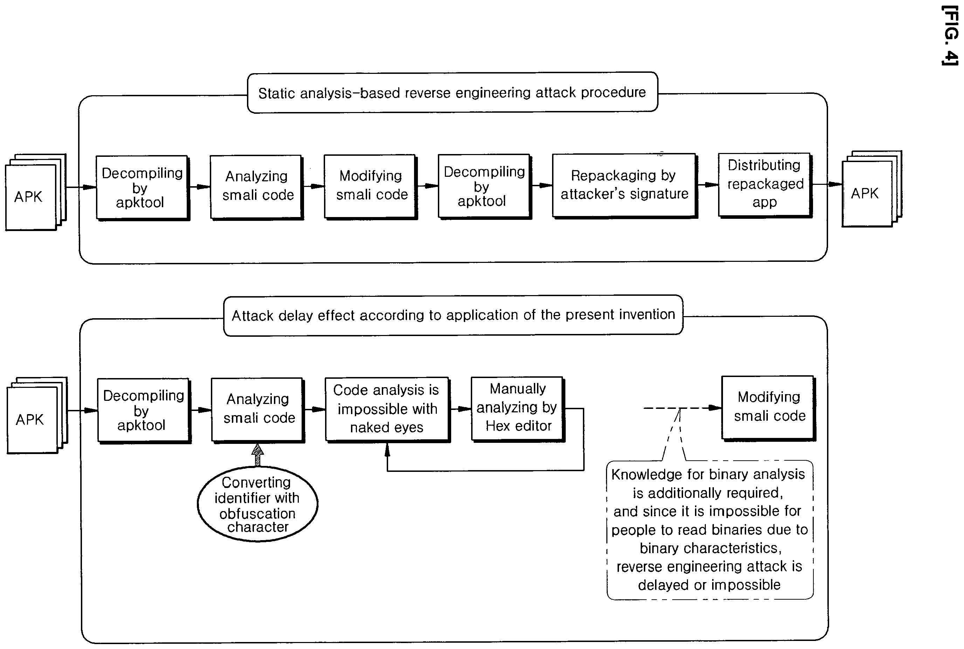

FIG. 4 illustrates a schematic diagram for explaining resistance improvement against reverse engineering analysis by a code obfuscation method using identifier conversion according to an exemplary embodiment of the present invention.

As shown in FIG. 4, in the case that the obfuscation scheme is not applied, an attacker obtains the smali code written with the dalvik bytecode by decompiling the APK file with an apktool, and then parses the smali code. After modifying the code of the smali code, the attacker recompiles it with the apktool. Then, after repackaging it with the attacker's signature using the apktool, the attacker may distribute the repackaged APK file. The attacker produces and distributes counterfeited or forged application programs through the above-described processes, thereby threatening security of the application program.

However, when the code obfuscation method using the identifier conversion according to the exemplary embodiment of the present invention is applied, although the attacker obtains the smali code after decompiling the APK file with the apktool, the attacker is not capable of analyzing the smali code by the naked eye, thereby increasing time necessary to analyze the smali code.

Since the attacker is not capable of analyzing the smali code by the naked eye, the attacker manually and directly checks hex values to analyze the codes with the editor targeting the binaries such as the hexa-editor. That is, since the smali code having the converted identifier is not analyzed by the conventional static analysis reverse engineering attack tool, time and cost required to analyze the code increase.

As such, according to the exemplary embodiment of the present invention, it is possible to increase the static analysis-based reverse engineering resistance by converting the identifier with the obfuscation characters which are not displayed on the screen or which are expressed with the same characters as other characters.

Further, since it is possible to confuse the attacker by using the obfuscation characters that have different unicodes but are identically expressed, the reverse engineering analysis resistance may be strengthened, and since the binary file analysis ability is required during the reverse engineering attack, the reverse engineering analysis resistance may be improved.

Further, according to the exemplary embodiment of the present invention, by applying the obfuscation scheme to the application program, it is possible to prevent the technology from being leaked and the application program to be counterfeited and forged due to the analysis of the application program, and it is possible to protect the application program from various security attacks.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

- 100 :: apparatus for code obfuscation
- 110 :: extractor
- 120 :: code analyzer
- 130 :: controller
- 140 :: identifier converter

## Claims

1. An apparatus (100) for code obfuscation using identifier conversion, comprising:
an extractor (110) that extracts a dalvik executable file by decompressing compression of an application program file;
a code analyzer (120) that analyzes a bytecode of the extracted dalvik executable file;
a controller (130) that selects a kind, the number, and an insertion position of obfuscation characters; and
an identifier converter (140) that converts an identifier of the bytecode by inserting the selected obfuscation characters into the bytecodes;
**characterized in that** the obfuscation characters are displayed on the screen same as other characters but have different unicodes.

2. The apparatus (100) for the code obfuscation using the identifier conversion of claim 1, wherein
the extractor (110) extracts a bytecode of the dalvik executable file by decompressing the compression of the application program file.

3. The apparatus (100) for the code obfuscation using the identifier conversion of claim 1, wherein
the identifier converter (140) inserts the obfuscation character into at least one of a class name, a method name, and a field name of the bytecode.

4. A method for code obfuscation using identifier conversion, comprising:
extracting (S210) a dalvik executable file by decompressing compression of an application program file;
analyzing (S220) a bytecode of the extracted dalvik executable file;
selecting (S230) a kind, the number, and an insertion position of obfuscation characters; and
converting (S240) an identifier of the bytecode by inserting the selected obfuscation characters into the bytecodes;
**characterized in that** the obfuscation characters are displayed on the screen same as other characters but have different unicodes.

5. The method for the code obfuscation using the identifier conversion of claim 4, wherein
the extracting (S210) of the dalvik executable file includes extracting a bytecode of the dalvik executable file by decompressing the compression of the application program file.

6. The method for the code obfuscation using the identifier conversion of claim 4, wherein
the converting (S240) of the identifier includes inserting the obfuscation character into at least one of a class name, a method name, and a field name of the bytecode.

## Patentansprüche

1. Vorrichtung (100) zur Codeverschleierung unter Verwendung von Kennungsumwandlung, umfassend:
einen Extraktor (110), der eine Dalvik-Executable-Datei durch Dekomprimieren der Komprimierung einer Anwendungsprogrammdatei extrahiert;
einen Code-Analysator (120), der einen Bytecode der extrahierten Dalvik-Executable-Datei analysiert;
eine Steuerung (130), die eine Art, die Anzahl und eine Einfügungsposition von Verschleierungszeichen auswählt; und
einen Kennungswandler (140), der eine Kennung des Bytecodes durch Einfügen der ausgewählten Verschleierungszeichen in die Bytecodes umwandelt;
**dadurch gekennzeichnet, dass** die Verschleierungszeichen auf dem Bildschirm gleich wie andere Zeichen angezeigt werden, jedoch verschiedene Unicodes besitzen.

2. Vorrichtung (100) für die Codeverschleierung unter Verwendung der Kennungsumwandlung nach Anspruch 1, wobei
der Extraktor (110) einen Bytecode der Dalvik-Executable-Datei durch Dekomprimieren der Komprimierung der Anwendungsprogrammdatei extrahiert.

3. Vorrichtung (100) für die Codeverschleierung unter Verwendung der Kennungsumwandlung nach Anspruch 1, wobei
der Kennungswandler (140) das Verschleierungszeichen in mindestens eines eines Klassennamens, eines Methodennamens und eines Feldnamens des Bytecodes einfügt.

4. Verfahren zur Codeverschleierung unter Verwendung von Kennungswandlung, umfassend:
Extrahieren (S210) einer Dalvik-Executable-Datei durch Dekomprimieren der Komprimierung einer Anwendungsprogrammdatei;
Analysieren (S220) eines Bytecodes der extrahierten Dalvik-Executable-Datei;
Auswählen (S230) einer Art, der Anzahl und einer Einfügungsposition von Verschleierungszeichen; und
Umwandeln (S240) einer Kennung des Bytecodes durch Einfügen der ausgewählten Verschleierungszeichen in die Bytecodes;
**dadurch gekennzeichnet, dass** die Verschleierungszeichen auf dem Bildschirm gleich wie andere Zeichen angezeigt werden, jedoch verschiedene Unicodes besitzen.

5. Verfahren für die Codeverschleierung unter Verwendung der Kennungsumwandlung nach Anspruch 4, wobei
das Extrahieren (S210) der Dalvik-Executable-Datei das Extrahieren eines Bytecodes der Dalvik-Executable-Datei durch Dekomprimieren der Komprimierung der Anwendungsprogrammdatei beinhaltet.

6. Verfahren für die Codeverschleierung unter Verwendung der Kennungsumwandlung nach Anspruch 4, wobei
das Umwandeln (S240) der Kennung das Einfügen des Verschleierungszeichens in mindestens eines eines Klassennamens, eines Methodennamens und eines Feldnamens des Bytecodes beinhaltet.

## Revendications

1. Appareil (100) de camouflage de code en utilisant une conversion d'identifiant, comprenant :
un extracteur (110) qui extrait un fichier exécutable Dalvik en décompressant une compression d'un fichier de programme d'application ;
un analyseur de code (120) qui analyse un code d'octet du fichier exécutable Dalvik extrait ;
un organe de commande (130) qui sélectionne un type, le nombre et une position d'insertion de caractères de camouflage ; et
un convertisseur d'identifiant (140) qui convertit un identifiant du code d'octet par l'insertion des caractères de camouflage sélectionnés dans les codes d'octet ;
**caractérisé en ce que** les caractères de camouflage sont affichés sur l'écran de la même manière que d'autres caractères mais ils ont des unicodes différents.

2. Appareil (100) de camouflage de code en utilisant la conversion d'identifiant selon la revendication 1, dans lequel
l'extracteur (110) extrait un code d'octet du fichier exécutable Dalvik en décompressant la compression du fichier de programme d'application.

3. Appareil (100) de camouflage de code en utilisant la conversion d'identifiant selon la revendication 1, dans lequel
le convertisseur d'identifiant (140) insère le caractère de camouflage dans au moins l'un d'un nom de classe, d'un nom de méthode et d'un nom de champ du code d'octet.

4. Procédé de camouflage de code en utilisant une conversion d'identifiant, comprenant :
l'extraction (S210) d'un fichier exécutable Dalvik en décompressant une compression d'un fichier de programme d'application ;
l'analyse (S220) d'un code d'octet du fichier exécutable Dalvik extrait ;
la sélection (S230) d'un type, du nombre et d'une position d'insertion de caractères de camouflage ; et
la conversion (S240) d'un identifiant du code d'octet par l'insertion des caractères de camouflage sélectionnés dans les codes d'octet ;
**caractérisé en ce que** les caractères de camouflage sont affichés sur l'écran de la même manière que d'autres caractères mais ils ont des unicodes différents.

5. Procédé de camouflage de code en utilisant la conversion d'identifiant selon la revendication 4, dans lequel
l'extraction (S210) du fichier exécutable Dalvik inclut l'extraction d'un code d'octet du fichier exécutable Dalvik en décompressant la compression du fichier de programme d'application.

6. Procédé de camouflage de code en utilisant la conversion d'identifiant selon la revendication 4, dans lequel
la conversion (S240) de l'identifiant inclut l'insertion du caractère de camouflage dans au moins l'un d'un nom de classe, d'un nom de méthode et d'un nom de champ du code d'octet.
